# EUROPEAN PATENT SPECIFICATION

(11) **EP 3 760 314 B1**
(45) Date of publication and mention of the grant of the patent: **07.06.2023**
(21) Application number: 20170931.8
(22) Date of filing: 22.04.2020
(51) Int. Cl.: B03C 1/033, B03C 1/28, B03C 1/30, F24D 19/00, C02F 1/48

(54) **SOLID PARTICLE SEPARATOR, METHOD OF SEPARATING SOLID PARTICLES FROM A FLUID BY SAID SEPARATOR AND METHOD OF DISCHARGING SOLID PARTICLES FROM SAID SEPARATOR**
FESTSTOFFTEILCHENSEPARATOR, VERFAHREN ZUM TRENNEN DER FESTSTOFFTEILCHEN AUS EINEM FLUID DURCH BESAGTEN SEPARATOR UND VERFAHREN ZUM AUSTRAGEN VON FESTSTOFFTEILCHEN AUS BESAGTEM SEPARATOR
SÉPARATEUR DE PARTICULES SOLIDES,PROCÉDÉ DE SÉPARATION DE PARTICULES SOLIDES À PARTIR D'UN FLUIDE PAR LEDIT SÉPARATEUR ET PROCÉDÉ DE DÉCHARGE DE PARTICULES SOLIDES À PARTIR DUDIT SÉPARATEUR

(30) Priority: 04.07.2019 IT 201900010920
(43) Date of publication of application: 06.01.2021
(73) Proprietor: FIMCIM S.P.A., 20121 Milano (MI) (IT)
(72) Inventor: CIMBERIO, Roberto, 28010 Ameno Fraz. Vacciago (NO) (IT); GUIDETTI, Tiziano, 28021 Borgomanero (NO) (IT); CHIARELLO, Andrea, 28010 Pella (NO) (IT)
(74) Representative: PGA S.p.A.

(56) References cited:
- EP-A1- 3 150 266
- EP-A1- 3 434 984
- EP-A2- 2 426 423
- WO-A1-2018/207083

## Description

### FIELD OF THE INVENTION

The present invention relates to a separator of solid particles from fluids. The present invention further relates to a method of separating solid particles from a fluid and to a method of discharging particles from said separator. The present invention may find application in hydraulic/thermal systems, for example air conditioning and/or heating, of a domestic and/or industrial type.

### STATE OF THE ART

The fluid circulating in a heating and/or conditioning heating system typically drags a quantity of solid particles such as, for example, metal particles that are formed due to the internal corrosion of pipes or coming from other equipment of the system.

These particles tend to accumulate inside the system's operating devices - for example pumps, valves and exchangers - with consequent alteration in the operation of the same devices; the accumulation of these particles can uncontrollably alter the design parameters of the system, reducing its overall efficiency or even causing breakdowns.

In order to overcome this drawback, solid particle separators have been developed comprising a casing provided with an inlet and an outlet for the fluid; a magnetic body is engaged inside the casing, having an elongated cylindrical shape placed concentrically to the casing: the magnetic body is configured to retain the solid ferrous particles suspended in the flow of fluid passing through the separator. The fluid substantially free of solid particles is expelled through the outlet of the casing. The solid particles are collected - following the extraction of the magnetic body from the separator - and expelled through a discharge opening of the casing at which a valve configured to regulate the discharge of the solid particles from the separator operates. Some examples of known separators are described in the following patent applications: EP 3 434 984 A1, JP H051 04021 A and WO 2018/073738 A1.

Although the known separators described above enable part of the solid particles dispersed in a fluid to be recovered, the Applicant has found that the previous solutions are not free from drawbacks and therefore can be improved in some respects. The known separators in fact have a relatively complex structure which negatively affects the efficiency of the separator both in terms of retaining the solid particles and in terms of ease in discharging them from the separator. A further example of separator is described in the European patent application n. EP 3 150 266 A1. The separator comprises a casing having - at a head portion - a fluid inlet and outlet, directly facing an elongated magnetic body placed concentrically inside the casing: the magnetic body is configured to retain any ferrous particles present in the fluid. Still inside the casing, around the magnetic body, there is a diverter configured to impose a cyclonic motion on the flow of fluid which allows the separator to collect - at a bottom portion of the casing opposite the head portion - any solid particles present in the fluid; still at the bottom portion, the casing has a discharge opening at which a valve operates, distinct and spaced from the magnetic body: the valve is placed to close the discharge opening and is engaged externally to the casing.

The separator described in patent application no. EP 3 150 266 A1 is an improvement over the solutions previously described as it allows retaining any ferrous particles efficiently. However, the Applicant has noted that the solution described in patent application no. EP 3 150 266 A1 can be further improved in certain aspects.

### OBJECT OF THE INVENTION

It is therefore the object of the present invention to solve at least one of the drawbacks and/or limitations of the above solutions.

A first object of the invention is to provide a separator capable of effectively separating ferrous particles and, optionally, non-ferrous particles from a fluid, in particular from a liquid. An object of the present invention is to provide a separator which has a simple and compact structure adapted to simplify and speed up the maintenance of the separator, in particular the steps of discharging the solid particles (ferrous and non-ferrous) from the separator. It is also an object of the present invention to provide a separator having a structure capable of guaranteeing a fluid-tight seal and preventing, during operating conditions of the separator, fluid leaks.

Another object of the present invention is to provide a process of making a solid particle separator from a fluid which is simple and quick to implement and therefore it has low operating costs, so as to enable the separator to be produced at low cost.

It is also an object of the present invention to provide a method of separating solid particles (ferrous and non-ferrous) which is extremely efficient, that is, capable of ensuring excellent filtering of the fluid passing through the separator. A further object of the present invention is to provide a method of discharging the solid particles retained by the magnetic body which is extremely rapid and easy to carry out, but which at the same time can guarantee a complete discharge of the particles from the separator and therefore a complete cleaning of the separator.

### SUMMARY

A separator according to the invention is disclosed in any one of appended claims 1-12. A method of separating solid particles from a fluid is disclosed in claim 13.

A method of discharging solid particles from a separator is discloses in any one of claims 14 and 15.

### BRIEF DESCRIPTION OF THE DRAWINGS

Some embodiments and some aspects of the invention are described hereinafter with reference to the accompanying drawings, provided only for illustrative and, therefore, non-limiting purposes, in which:
- figure 1 is a perspective view of a separator according to aspects of the present invention;
- figure 2 is a longitudinal section of a separator according to aspects of the present invention;
- figures 3 to 5 schematically illustrate a distribution head of a separator according to aspects of the present invention;
- figure 6 is a cross-section of a separator according to aspects of the present invention;
- figures 7 to 9 schematically illustrate a deviator that can be used by a separator according to aspects of the present invention;
- figure 10 is an exploded view of a separator according to aspects of the present invention;
- figures 11 to 14 schematically show some steps for discharging solid particles from a separator according to aspects of the present invention;
- figure 15 is a detailed perspective view of a bottom portion of a separator according to aspects of the present invention;
- figure 16 is a detailed section view of a bottom portion of a separator according to aspects of the present invention.

### DEFINITIONS AND CONVENTIONS

It should be noted that in the present detailed description, corresponding parts illustrated in the various figures are indicated by the same reference numerals. The figures may illustrate the object of the invention by representations that are not in scale; therefore, parts and components illustrated in the figures relating to the object of the invention may relate solely to schematic representations.

The term solid particles refers to a finely divided ferrous and/or non-ferrous material dispersed in a fluid, in particular a liquid such as water. In detail, the particles may be part of a suspension defined by a component in the solid state, that is the particles themselves, finely dispersed within the majority component which is in the liquid state, for example water.

The terms magnet or magnetic referring to a body or a component means that this body or component has at least a part with substantially stable magnetic properties or at least a magnetizable part so as to have magnetic properties at least for a period of time.

### DETAILED DESCRIPTION

### Separator

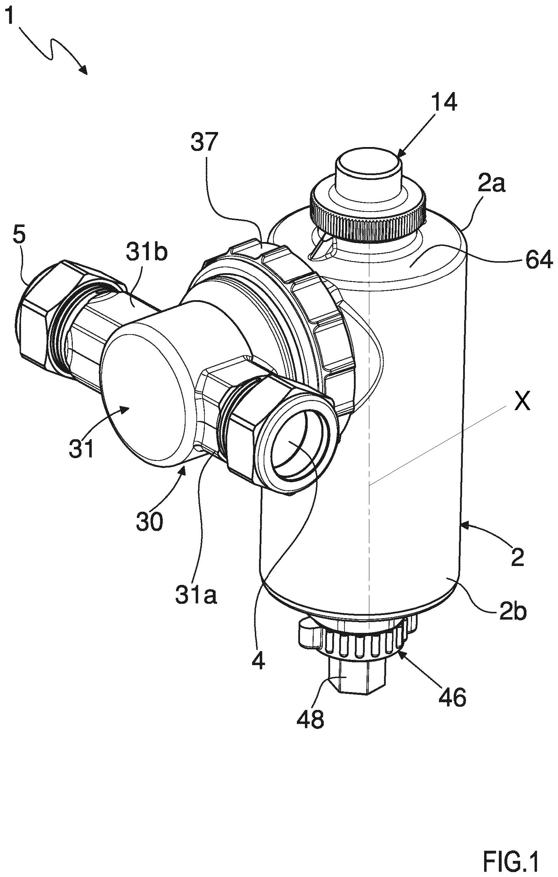

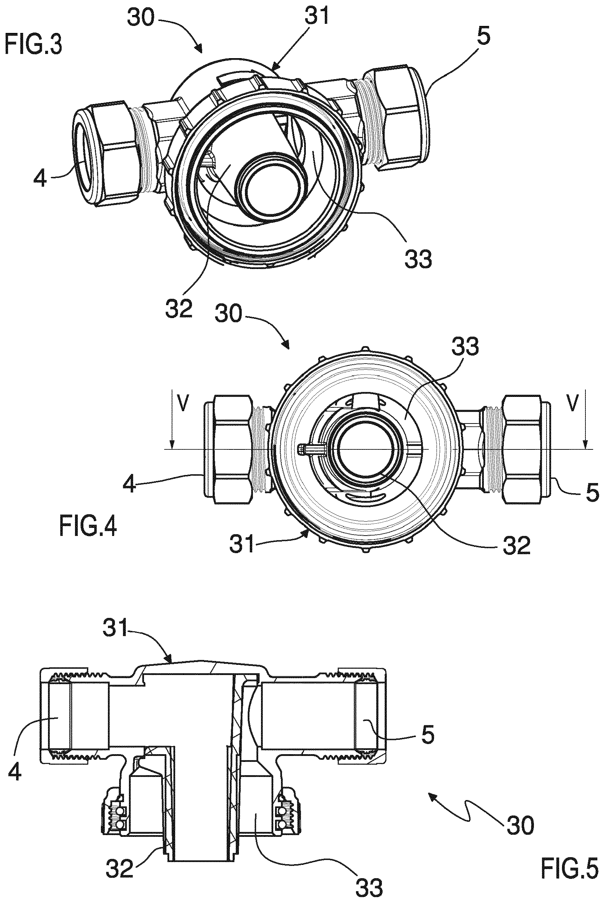

The reference numeral 1 indicates a particle separator, for example usable in heating or conditioning systems, both for industrial and domestic use. The separator 1 configured to receive a fluid in crossing, in particular a liquid (such as water), and treat it so as to allow the separation of solid particles from the flow of fluid that passes through the separator 1 to define at the outlet a clean liquid flow: the clean flow leaving the separator 2 is destined to be circulated in said heating or conditioning systems. As can be seen from the accompanying figures, the separator 1 comprises at least one containment body 2, for example tubular with a circular section (more generally axially symmetrical), which extends along a longitudinal axis X between a top portion 2a and a bottom portion 2b (see for example figure 1). The possibility of making a containment body 2 having, for example, a square section (possibly only in the lower section) or an elliptical section is not excluded. The section may be constant or variable. In detail, the containment body 2 has, at the portion 2a, a top wall 64 connected, by means of a lateral wall, to a bottom wall 24 arranged at the portion 2b and therefore opposite to the top wall 64. The containment body 2 defines a housing compartment 3 at its interior, which is delimited by an inner lateral surface 12 (figure 5).

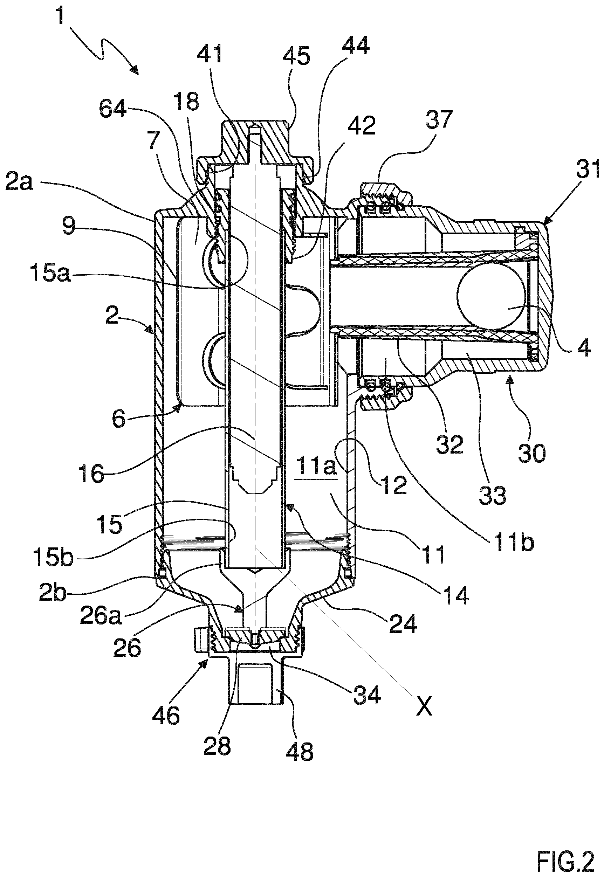

As can be seen, for example, in figure 2, the containment body 2 has, at the top portion 2a, and in greater detail on the top wall 64, a through opening 17 with a circular section configured to allow access to the housing compartment 3 from the outside of the containment body 2. In detail, the containment body 2 has, on the top wall 64, a hollow collar emerging from the latter - according to a direction coming out of the housing space 3, parallel to the longitudinal axis X - and on which an engagement portion 18 and optionally an auxiliary engagement portion 41 are defined, designed to allow the constraint of the containment body 2 with a magnetic device 14.

In greater detail again, the engagement portion 18 is defined inside the hollow collar and comprises an internal thread, optionally defining a nut screw. On the contrary, the further engagement portion 41 comprises a thread defined on the outside of the hollow collar and adapted to define a screw. The possibility of making an engagement portion 18 comprising an external thread and a further engagement portion 41 having an internal thread is not excluded. The possibility of making engagement portions 18 and 41 having a different structure, for example comprising a quick coupling or a bayonet portion, or other removable coupling system is not excluded.

The containment body 2 further comprises, substantially at the top portion 2a, at least one inlet 4 and at least one outlet 5 respectively configured to allow the introduction and discharge of fluid from the separator 1. The accompanying figures show an embodiment of the containment body 2 comprising at least one access 29 passing through the lateral wall of the containment body 2 and distinct from the through opening 17 defined on the top wall 64. The access 29 extends orthogonally to the axis X of the containment body 2 and is delimited by a free edge having a closed profile having a circular shape. The accompanying figures show an access 29 which has a development axis whose extension intersects a longitudinal development axis of the tubular containment body; in other words, the access 29 is aligned and centered on the lateral wall of the body 2 with respect to the prevalent development axis of the body 2 having a tubular shape (access 29 in axis). The possibility of defining an eccentric access with respect to the axis of the tubular body 2 is not excluded: in this condition, the development axis of the access will be spaced by a certain non-zero distance from the development axis of the tubular body 2.

At the access 29, both the inlet 4 and the outlet 5 are defined, so that the fluid can pass, both in the introduction and in the discharge, through the access 29. Although in the following description reference will be made to the accompanying drawings, always indicating the inlet with reference numeral 4 and the outlet with reference numeral 5, it is important to underline that inlet 4 and outlet 5 could be inverted, i.e. the device represented and described below may also be configured so that the inlet is the component indicated in the figures with reference numeral 5 and the outlet is the component indicated with reference numeral 4.

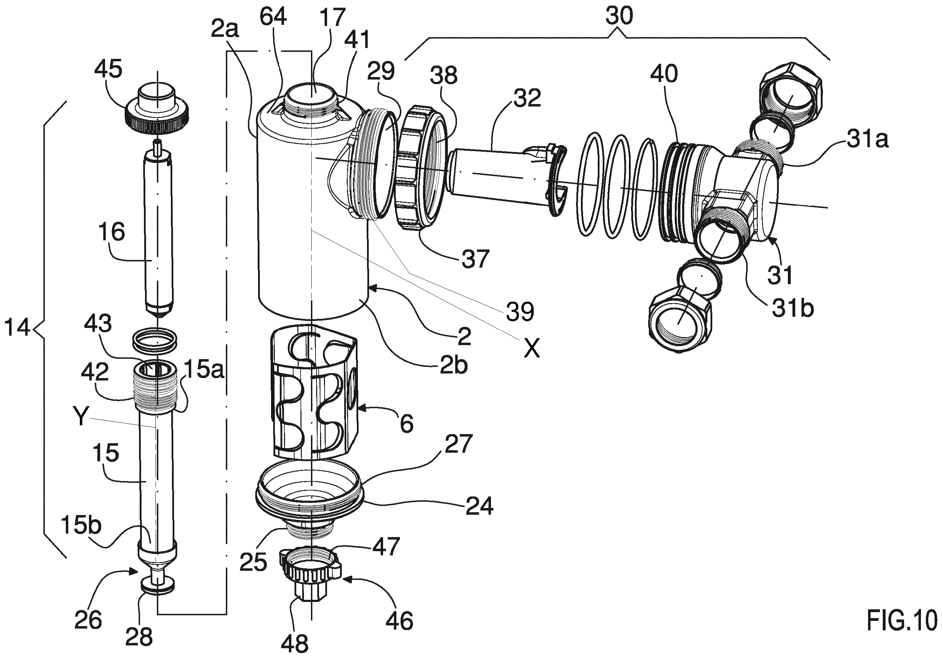

In greater detail and as can be seen, for example, in figure 10, an engagement portion 39 is defined at the access 29 to allow engagement of a distribution head 30 to the containment body 2 configured to hydraulically manage the introduction and discharge of fluid from the single access 29. The engagement portion 39 comprises a collar emerging from the body 2 outside the housing compartment 3 and carrying a thread which, as will be seen further on, is configured to engage a respective thread of the distribution head 30. In the accompanying figures, an embodiment of the collar (engagement portion 39) is shown carrying an external thread; the possibility of making an engagement portion 39 comprising an internal thread, a fast-coupling or bayonet engagement portion, or other engagement system, fixed or removable, orientable or not, is not excluded.

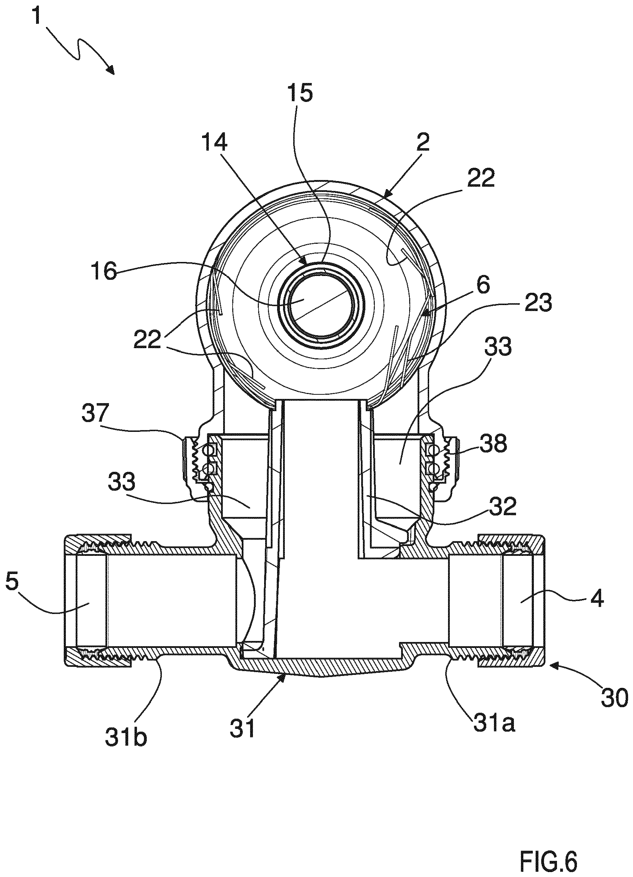

The distribution head 30 comprises a collar having a tubular shape, optionally cylindrical, and having an engagement portion 40 (figure 10) configured for being stably fixed to the engagement portion 39 of the access 29, so that the collar and the access are in fluid communication with each other: in the engaged condition, the collar of the head 30 is in fluid communication, through the access 29, with the housing compartment 3 of the containment body 2. The accompanying figures show a configuration of the head 30 comprising an intermediate connection element 37 (see, for example, figures 1, 2 and 10), for example consisting of a threaded ring nut, which is configured to engage, on the one hand, the engagement portion 39 of the access 29 and, on the other hand, to receive the engagement portion 40 of the head 30: the element 37 is therefore configured to indirectly constrain the head to the containment body. In greater detail, the ring nut 37 has a (threaded) engagement portion 38 configured to reversibly engage the corresponding (threaded) engagement portion 39 of the containment body 2 (figure 10); moreover, the ring nut 37 is also constrained (for example by interposing a Seeger ring of the type illustrated in figures 2 and 6) to the distribution head 30 itself so as to be free to rotate with respect thereto, but axially locked. However, the possibility of defining a distribution head 30 the engagement portion 40 whereof can be directly connected to the engagement portion 39 of the access 29, for example by means of a quick coupling, a bayonet engagement or by threaded portions, or other fixed or removable engagement, orientable or not, is not excluded.

In an embodiment, the collar of the distribution head 30 has a duct 32 at its interior defining the inlet 4 and a separate duct 33 for the outlet 5 of the fluid. The ducts 32 and 33 may for example be arranged at least partly concentrically with each other as shown for example in figures 2, 5 and 6. The duct 32 of the inlet 4 comprises a central tube having, for example a circular shape, around which the duct 33 of the outlet 5 is defined: the duct 33 of the outlet 5 is defined by an external lateral surface of the duct 32 and by an inner lateral surface of the manifold of the same distribution head 30. The duct 32 of the inlet 4 extends between a first and a second end portion, along a development axis orthogonal to the axis X of the containment body 2. The duct 33 develops diametrically around the duct of the inlet 4 and therefore also the duct 33 extends by at least a part along an orthogonal development axis and intersecting the axis X of the containment body 2, coaxial with the duct 32 of the inlet 4. Moreover, part of the duct 33 of the outlet 5 extends annularly around the duct 32 of the inlet 4.

The distribution head 30 may comprise an attachment device 31 as shown for example in figures 3-5 comprising the coaxial ducts 32 and 33, defining at least in part the inlet 4 and the outlet 5, and a first and second external connection manifold 31a, 31b (figure 1) respectively in fluid communication with the duct 32 of the inlet 4 and the duct 33 of the outlet 5. The first external connection manifold 31a essentially comprises a hollow cylindrical tube connected at one end to the duct 32; the first manifold 31a extends along a prevalent development direction substantially orthogonal to the prevalent development direction of the duct 32: the first manifold 31a is in particular in direct fluid communication with the duct 32 and is configured to connect to a distribution pipe of the fluid for sequentially feeding the duct 32 and the containment body 2. The second manifold 31b also comprises a hollow cylindrical tube connected at one end to the duct 33 of the outlet 5; the second manifold 31b extends along a prevalent development direction orthogonal to the prevalent development direction of the duct 33: the second manifold 31b is in particular in direct fluid communication with the duct 33 and is configured to connect to a fluid outlet tube to allow the emission of fluid from the containment body 2. The second manifold 31b extends along a prevalent development direction parallel to the development direction of the first manifold 31a, but on the opposite side to the latter, so as to define an attachment device 31 having a substantially T shape (see for example figure 1).

In the accompanying figures, a configuration of the containment body 2 has been shown in which the inlet 4 and the outlet 5 are defined at the access 29 (inlet 4 and outlet 5 at least partly coaxial); the possibility of providing a containment body 2 having two distinct accesses, for example mutually opposite with respect to the containment body 2 itself, respectively configured to communicate with the inlet 4 and the outlet 5, is not excluded. In this last configuration described, inlet and outlet are distinct and spaced apart (configuration not shown in the accompanying figures).

As can be seen in the accompanying figures and as mentioned above, the containment body 2 has a bottom portion 2b at which a bottom part is present; the bottom portion (wall) 2b is configured to allow the collection (by gravity and cyclonic effect) of solid particles suspended in the flow of fluid circulating in the separator 1.

As can be seen in the accompanying figures, the bottom wall 24 comprises a tightening defined starting from the bottom portion 2b of the containment body 2 away from the top portion 2a. The tightening of the bottom wall 24 may be substantially shaped like a funnel.

As can be seen in figures 2, 14 and 16, the containment body 2 further comprises a discharge opening 34 defined at the bottom portion 2b and in particular on the bottom wall 24: the discharge opening is distinct and spaced from the access 29 and from the through opening 17 of the same containment body. In detail, as can be seen in the accompanying figures, the discharge opening 34 is opposed to the through opening 17. The discharge opening 34 is configured to allow the discharge of the solid particles (optionally ferrous) collected by the separator 1. In fact, the bottom portion 2b substantially represents a base for collecting the solid particles open on the bottom (discharge opening 34) and in communication with the inlet 4 and the outlet 5.

In figures 2, 11-14, an embodiment of the discharge opening 34 is shown, comprising at least one between a tightening of the bottom portion and a flat abutment extending orthogonally to the longitudinal axis X of the containment body 2.

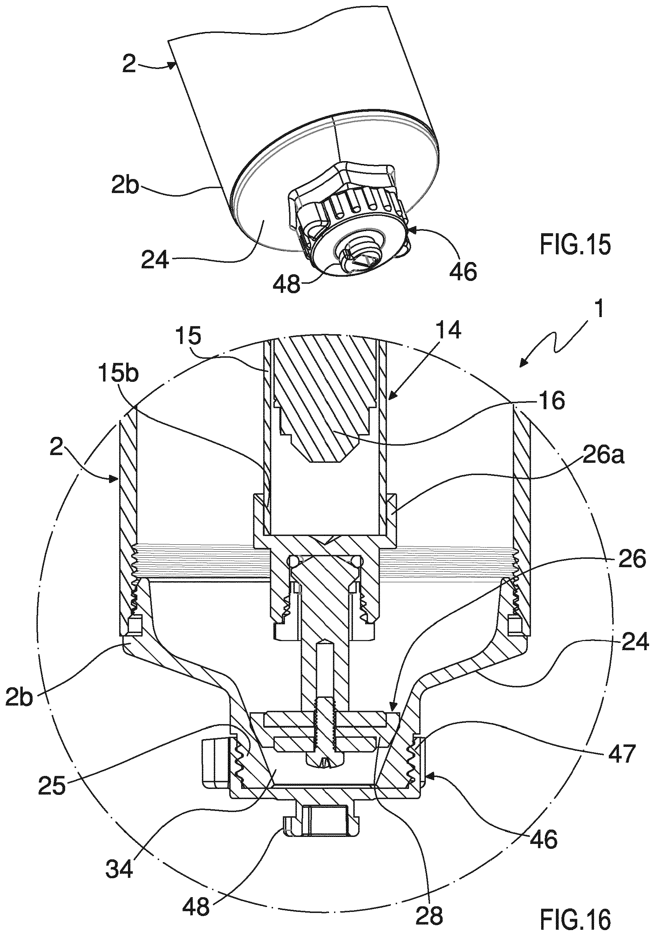

Figure 16 illustrates a discharge opening 34 delimited a truncated cone-shaped surface having a decreasing passage section according to a discharging direction of the solid particles from the separator 1. In both cases, the discharge opening 34 is defined by, or defines itself, an end tightening of the containment body 2 at the bottom wall 24.

As can be seen in the accompanying figures, the containment body 2 comprises a further hollow collar emerging from the bottom wall 24 and internally delimiting the discharge opening 34; the hollow collar placed on the bottom wall 24 comprises an engagement portion 25 configured to allow a firm but at the same time reversible engagement to a respective engagement portion 47 of an auxiliary closure element 46 which will be better described hereinafter.

The figures show an engagement portion 25 comprising an external thread defining essentially a screw; however, the possibility of making an engagement portion 25 comprising an internal thread, fast-coupling, bayonet-type, or other type of engagement portion is not excluded.

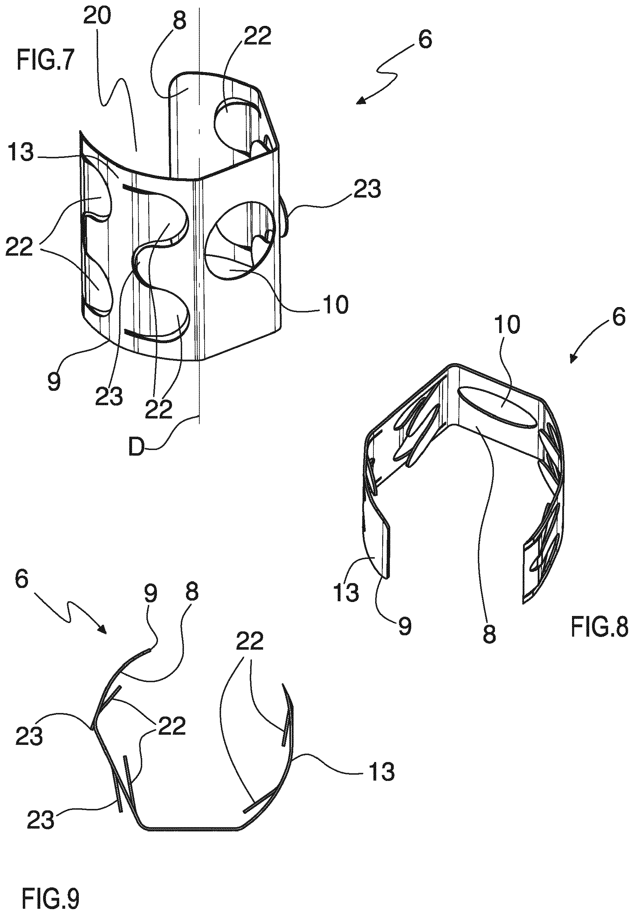

As can be seen, for example, in figures 2, 6, 10-14, the separator 1 may comprise a diverter 6 located inside the housing compartment 3, operatively interposed between the inlet 4 and the outlet 5: the diverter 6 is substantially coaxial to the containment body 2. The diverter 6 comprises a lateral wall 9 provided with an internal lateral surface 8 and an external lateral surface 13 mutually opposite (see, for example, figures 7-9). The diverter 6 also defines a through seat 20 (figure 7) which extends along a development direction D of the diverter and is delimited by the internal lateral surface 8 of the lateral wall 9. The lateral wall 9 of the diverter 6 also has a through opening 10 configured to allow direct fluid communication between the seat 20 of the diverter and the inlet 4; in fact, the opening 10 is intended to allow the entry of fluid into the diverter 6. The diverter 6 is engaged inside the containment body 2 at the top portion 2a, so that the through opening 10 of the diverter 6 faces the access 29 of the body 2: the through opening 10 is therefore in direct fluid communication with the inlet 4.

In the case in which the containment body 2 has the distribution head 30, the through opening 10 receives in engagement the duct 32 defining at least part of the inlet 4. In particular, the second end portion of the duct 32 is complementarily shaped at the opening 10 and directly inserted inside the same; in this way, the duct 32 is engaged to the diverter 6 and contributes to its stable engagement within the containment body 2.

The diverter 6 comprises a predetermined number of flow diverter elements 22, 23 emerging from the lateral wall 9 itself and configured to intercept at least a part of the fluid flow entering the separator 1 (see figures 7-9, for example). In detail, the diverter 6 may comprise a plurality of main elements 22, each of which comprises an attachment portion directly engaged to the internal lateral surface 8 of the diverter 6 and extending along an arched trajectory entering the seat 20 of the diverter 6. Each main element 22 further comprises a projecting portion extending, in continuity, starting from the attachment portion towards a direction entering the seat 20. The main elements 22 are shaped in such a way as to intercept the fluid entering the deviator 6 and define a cyclonic pattern of the fluid itself inside the seat 20 of the diverter 6: the cyclonic flow of the fluid allows better collection downwards of the solid particles suspended in the fluid which are then deposited on the bottom wall 24 of the containment body 2.

The diverter 6 may furthermore comprise at least one auxiliary element 23 emerging from an external lateral surface 13 of the lateral wall 9 of the diverter 6 according to a direction exiting from the seat 20 of the diverter 6 itself. Each auxiliary element 23 comprises an attachment portion directly engaged to the external lateral surface 13 of the diverter 6 and extending along an arched trajectory with respect to the seat 20. Each auxiliary element 23 also comprises a protruding portion extending, in continuity, starting from the attachment portion towards an outgoing direction with respect to the seat 20; the auxiliary element 23 cooperates with the main elements to favor the cyclonic pattern of the fluid entering the separator 1. The diverter 6 described above may be according to the diverter described in paragraphs [0130] to [0150] of the European patent application no. EP 3 150 266 A1.

As mentioned above, the diverter 6 is positioned inside the containment body 2 interposed between the inlet 4 and the outlet 5 and at the top portion 2a of the containment body 2, facing the access 29. The diverter 6 defines, in collaboration with the containment body 2, a first and a second chamber 7, 11, which are both arranged inside the housing compartment 3. The first chamber 7 is defined inside the diverter 6 and is delimited by the internal lateral surface 8 of the lateral wall 9 of the diverter 6 (the first chamber 7 substantially coincides with the seat 20). The first chamber 7 is in direct fluid communication with the second chamber 11, which is defined downstream of the first chamber 7 along the advancement direction of the fluid inside the containment body 2. In fact, the second chamber 11 is defined below and outside the first chamber 7 and in particular at the bottom portion 2b of the containment body 2.

The second chamber 11 is delimited at least in part by the internal lateral surface 12 of the containment body 2 and extends externally to the diverter 6. The second chamber 11 is, on the one hand, in direct fluid communication with the first chamber 7 and, on the other hand, is in direct fluid communication with the outlet 5. According to the embodiment shown in the accompanying figures, the second chamber 11 comprises a first compartment 11a and a second compartment 11b. The first compartment 11a is delimited by the internal lateral surface 12 of the containment body 2 and is arranged downstream of the first chamber 7 along an advancement path of the fluid. The first compartment 11a is interposed between the first chamber 7 and the second compartment 11b and is immediately consecutive to the first chamber 7. The first compartment 11a is defined below the first chamber 7 and at the bottom portion 2b of the containment body 2.

The second compartment 11b is defined between the internal lateral surface 12 of the containment body 2 and the external lateral surface 13 of the lateral wall 9 of the diverter 6. The second compartment 11b is arranged downstream of the first compartment 11a along the fluid advancement path: the second compartment 11b is interposed between the first compartment 11a and the outlet 5 and is immediately consecutive to the first compartment 11a.

For the sake of completeness, the flow pattern inside the separator 1 in the presence of the diverter 6 is now schematically described. Under operating conditions of the separator 1, the fluid enters the containment body 2 through the duct 32 of the inlet 4 and is conveyed into the first chamber 7 (inside the diverter 6) where the main elements 22 of the diverter 6 intercept and divert the flow to generate a cyclonic course. The flow then advances, proceeding along the containment body 2 from the top portion 2a to the bottom portion 2b, from the first chamber 7 to the first compartment 11a of the second chamber 11, to then rise up along the containment body 2 passing through the second compartment 11b of the second chamber 11. The rising fluid mainly passes between the diverter 6 and the containment body 2 and is evacuated from the separator 1 through the duct 33 of the outlet 5.

The containment body 2 may be made at least partly of metallic material, for example it may be made using at least one selected from the group of the following metal materials: steel, brass, bronze, copper and alloys thereof, aluminum and alloys thereof. The containment body 2 may also or alternatively be made at least partly (or entirely) of plastic material; for example, it may be made using at least one selected from the group of the following materials: ABS, PPS, PSU, PE, PTFE, PVC, PET. Alternatively, the containment body 2 may be made using both metallic material and plastic material as listed above.

As can be seen in the accompanying figures, the separator 1 further comprises a magnetic device 14 removably engaged with the containment body 2 inside the housing compartment 3 which is configured to attract ferrous or ferromagnetic particles present in the fluid. The magnetic device 14 has an elongated shape, for example cylindrical: the magnetic device 14 is at least in part inserted in the housing compartment 3 through the through opening 17 of the containment body 2 and extends over a preponderant part of the containment body 2 along the longitudinal axis X of the containment body 2. In detail, the magnetic device 14 extends from the top wall 64 to the vicinity of the bottom wall 24. In detail, the ratio between a predetermined axial extension of the containment body 2, defined by a distance present between the top wall 64 and the bottom wall 24, and an axial extension of the magnetic device 14 inside the containment body is between 1 and 1.4, optionally between 1.05 and 1.2.

Inside the housing compartment 3, the magnetic device 14 faces the access 29 and extends partly in the first chamber 7 (concentrically also to the first compartment 11a of the second chamber 11) coaxially to the containment body 2. In the optional case where the diverter 6 is present, the magnetic device 14 is arranged inside the diverter 6 and is coaxial with the diverter 6.

The magnetic device 14 comprises a casing 15 inside which at least one magnet 16 is housed which generates a magnetic field such as to attract and hold the ferrous/ferromagnetic particles against the casing 15. In detail, the casing 15 comprises a hollow body having elongated shape and extended between a first end portion 15a, at which the casing 15 is engaged to the containment body 2, and a second end portion 15b, substantially facing the bottom portion 2b. In fact, the casing 15 is extended starting from the top portion 2a of the containment body 2 in the direction of the bottom portion 2b, along a respective prevalent development direction Y parallel to the longitudinal axis X of the containment body 2.

As can be seen, for example, in figures 2, 10-14, the casing 15 comprises an engagement portion 42 - located at the first end portion 15a - configured to cooperate with the engagement portion 18 of the containment body 2 to reversibly constrain the casing 15 and thus the separator 1. In addition to allowing the removable constraint, the engagement portions 18, 42, of the containment body 2 and of the casing 15, respectively, are configured for allowing at least one relative translation between said containment body 2 and casing 15 along the longitudinal axis X of the containment body 2. In particular, thanks to the engagement of said engagement portions 18 and 42, the casing is movable inside the housing compartment 15 approaching and away from the bottom portion 2b, in particular with respect to the bottom wall 24.

The engagement portion 42 of the casing 15 may for example comprise an external thread to essentially define a screw adapted to cooperate with the internal threading 18 of the containment body 2; in the illustrated embodiment, the engagement portions 18, 42 respectively of the containment body 2 and of the casing 15 define a threaded coupling, optionally a type of screw-nut screw coupling. Thanks to this type of coupling, casing 15 and containment body are also movable relatively by rotation with respect to each other about the development axis Y of the casing 15; this relative rotation, thanks to the threaded coupling, allows the casing 15 to translate inside the housing compartment 3 parallel to the axis X. The possibility of making an engagement portion 42 comprising an internal thread, or a different coupling defined for example by an engagement portion with a quick coupling or bayonet, is not excluded.

Still at the first end portion 15a, at the engagement portion 42, the casing comprises a guide portion 50 configured to receive a suitable tool in engagement for moving said casing relative to the containment body 2. The guide portion is in particular defined by a seat defined in the hollow body of the casing 15.

As mentioned above, the casing 15 defines a hollow body. In detail, the hollow body of the casing 15 comprises:
- a first passage opening placed at the first end portion 15a of the casing 15 and through which the magnet 16 can be removed from or inserted into the casing 15,
- a second passage opening placed at the second end portion 15b of the casing 15 in communication with the first passage opening.

The magnetic device 14 comprises a closure element 45 engageable with the containment body 2 and placed to close the first passage opening of the casing 15. In detail, the closure element 45 comprises an engagement portion 44 constrainable to the auxiliary engagement portion 41 of the containment body 2. In greater detail again, the engagement portion 44 of the closure element comprises an internal thread, optionally adapted to essentially define a nut screw cooperating with the external thread of the auxiliary engagement portion 41 defined on the collar of the containment body 2: the auxiliary engagement portion 41 of the containment body 2 and the engagement portion 44 of the closure element 45 define a threaded coupling adapted to allow, by unscrewing, the removal of the closure element 45 from the containment body 2 .

The closure element 45 may be integrally engaged, optionally fixed, to the magnet 16; in this way, following the disengagement (optionally the unscrewing) of the closure element 45 from the containment body 2 it is possible to remove the magnet from the casing 15 thanks to the removal of the closure element 45, as schematically illustrated in figure 2.

As mentioned above, the magnetic device 14 comprises at least one magnet 16: the magnet 16 constitutes the element of the magnetic device 14 configured to attract, under operating conditions of the separator 1, the ferrous particles present in suspension in the fluid flow circulating inside the separator 1, The ferrous particles are deposited on an external surface of the casing 15 by means of the magnetic attraction exerted thereon by the magnet 16. As described above, the magnet 16 is removably housed inside the casing 15. When cleaning the separator, the removal of the magnet 16 allows the ferrous particles to fall by gravity and collect on the bottom portion 24 of the containment body 2.

As can be seen in the accompanying figures, the magnet 16 is arranged in the casing 15 facing the access 29; the magnet 16 is extended within the casing 15 for a preponderant part of the extension of the latter, starting from the first end portion 15 of the casing in the direction of the second end portion 15b. A ratio between an extension of the casing 15 along its axis Y and an extension of the magnet 16 located inside the casing may be between 1 and 1.5, optionally between 1.05 and 1.3.

As shown in figure 2, the magnet 16 has a predetermined length or extension, measured along the axis X of the containment body; the access 29 has a maximum fluid passage section which has a predetermined height or extension also measured along the longitudinal axis X of the containment body. As shown for example in figure 2, the predetermined length of the magnet 16 is greater than the height of the maximum passage section of the access 29; in particular, the ratio between the predetermined length of the magnet 16 and the height of the maximum passage section of the access 29 is greater than 1,2, optionally greater than 1,5, and even more optionally between 1,8 and 3. As mentioned above, the magnet 16 faces the access 29; in particular, the magnet 16, according to a frontal view at said access 29, extends for the whole height of the passage section defined by said access 29. In this way, the magnet 16 entirely faces the access 29 so that, according to a frontal view at access 29, the magnet can cover the whole height of access 29. This configuration of the magnet 16 and access 29 allows the magnet 16 to be fully hit by the flow at least during an input or output condition of the fluid flow from the access 29.

As specified above, inlet 4 can be annularly external to outlet 5. In this configuration, the magnet 16 is fully hit by the fluid flow both during the introduction of the fluid through inlet 4 and the emission through outlet 5; in this way it is possible to maximize the separation efficiency of solid particles from the fluid.

As can be seen in the accompanying figures, the separator 1 comprises at least one shutter 26 carried by the casing 15 and movable relative to the containment body 2, at least between:
- a first operating position in which the shutter 26 prevents the passage of fluid through the discharge opening 34, and
- a second operating position in which the shutter 26 allows the passage of fluid through the discharge opening 34.

As mentioned above, the casing 15 is movable by translation with respect to the containment body 2; the shutter 26 is carried by the casing 15 and therefore movable together with the latter: thanks to the translation of the casing 15, the shutter 26 is also movable by translation between the first and second operating portion along a direction parallel to the longitudinal axis X of the containment body 2. In detail, the shutter 26 is movable inside the housing compartment 3 when moving away from and approaching the top portion 2a. In particular, when moving from the second to the first operating position, shutter 26 is movable away from the top portion 2a while, when moving from the first to the second operating position, shutter 26 is movable approaching the top portion 2a. In fact, the shutter, in the first and second operating position, is always placed entirely inside the housing compartment 3 of the containment body; in the first operating position, the shutter is configured to close on an internal surface of the containment body 2.

In detail, the shutter 26 is also engaged within the housing compartment 3 of the containment body 2 at the second end portion of the housing 15. In greater detail again, the shutter 26 is placed to close the second passage opening of the casing: the casing 15, the closure element 45 and the shutter 26 define a closed volume space for the magnet 16. The internal volume of the casing 15 is therefore not in fluid communication with an internal volume of the housing compartment 3 of the containment body 2.

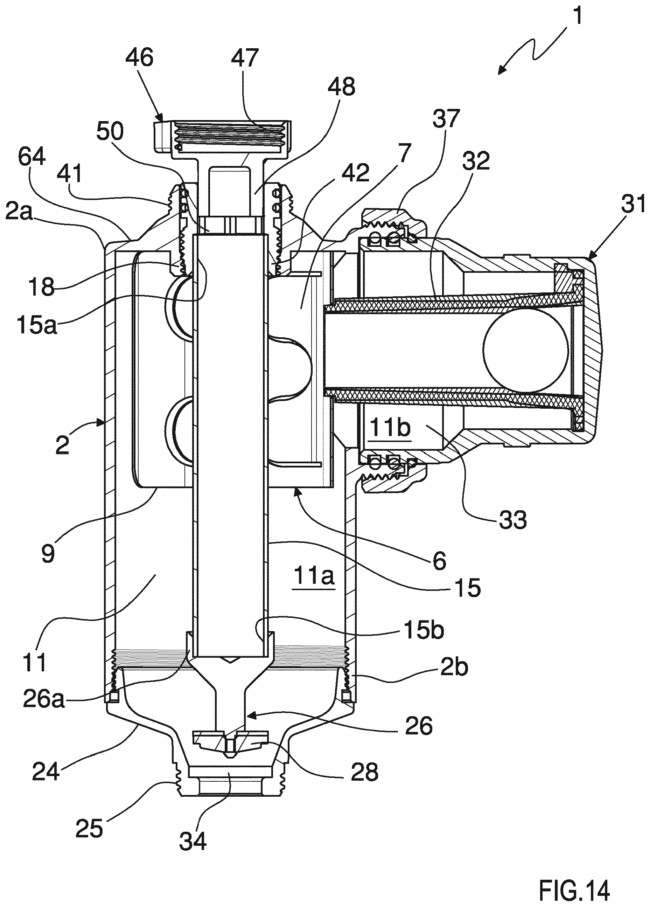

In fact, the shutter 26 emerges from the magnetic device 14 starting from the second end portion 15b of the casing 15 away from the first end portion 15a; the shutter 26 extends parallel to the axis Y of the casing and consequently parallel to the longitudinal axis X of the containment body 2. The shutter 26 comprises an attachment portion 26a fixed to the casing 15 at the second end portion 15b; a closure body 28 of the shutter 26 is constrained to the attachment portion 26a and configured to close the discharge opening 34 in the first operating position of the shutter 26 in a fluid-tight manner. In fact, the attachment portion 26a essentially defines a stem (or a connecting element) of the shutter 26 to the casing which carries the closure body 28, an element which actively acts as a plug for the discharge opening 34. Figures 2 and 14 show a closure body 28 fixed to the attachment portion 26a. Figure 16 illustrates a variant embodiment in which the closure body 28 is hinged to the attachment portion 26a in a manner such to be able to rotate with respect to the latter at least around an axis. In particular, the closure body 28 is movable by rotation with respect to the attachment portion 26a about an axis parallel to the longitudinal axis X of the containment body 2 and/or around an axis orthogonal to the longitudinal axis X of the containment body 2.

The closure body 28 has an outer surface at least partly counter-shaped to the inner surface of the containment body 2 defining the discharge opening 34.

In figures 2, 11-13 and 16, the shutter 26 is shown in the first operating position and placed to close the discharge opening 36: the closure body 28, at least partly counter-shaped to the inner surface of the discharge opening 34, is placed in contact with said internal surface to close in a fluid-tight manner the discharge opening and prevent the fluid and/or any particles collected on the bottom wall from coming out of the separator. Figure 14 instead illustrates a shutter 36 located in the second operating position in which the shutter 26, optionally the closure body 28, is spaced from the discharge opening 34 to define a passage gap adapted to allow the discharge of fluid and/or any particles collected on the bottom wall by the separator 1.

As specified above, the discharge opening 34 may include a flat abutment and a truncated cone surface. The shutter 26 is configured to close at least one of said flat abutment and truncated cone surface. Figure 2 schematically shows a shutter 26 configured to contact and close only one flat abutment of the containment body arranged inside the housing compartment 3. In fact, the flat abutment defines at least a part of an internal surface of the containment body 2; the shutter 26 is configured to contact the internal flat abutment in the first operating position when the shutter is in a position away from the top portion.

Figure 16 shows a discharge opening with only one truncated cone surface. Figure 16 shows a shutter 26 configured to contact and close only on the truncated cone surface of the containment body located inside housing compartment 3. In fact, the truncated cone surface defines at least one part of an internal surface of the containment body 2; the shutter 26 is configured to contact the internal truncated cone surface in the first operating position when the shutter is in a position away from the top portion 2a.

The shutter 26 may be made at least partly of metallic material, for example it may be made using at least one selected from the group of the following metal materials: steel, brass, bronze, copper and alloys thereof, aluminum and alloys thereof. The shutter 26 may also be made at least partly (or entirely) of plastic material; for example, it may be made using at least one selected from the group of the following materials: ABS, PPS, PSU, PE, PTFE, PVC, PET. Alternatively, the shutter 26 may be made using both metallic material and plastic material as listed above. In an embodiment, the attachment portion 26a of the shutter 26 is made of metal material while the closure body 28 is made of plastic material.

The separator 1 may further comprise at least one auxiliary closure element 46 engageable with the containment body 2 in closing the discharge opening 34. In detail, the auxiliary closure element 46 comprises a blind plug having an engagement portion 47 configured to be removably constrained to the engagement portion 25 defined on the hollow collar located on the bottom wall 24 of the containment body 2.

In greater detail again, the engagement portion 47 of the auxiliary closure element 46 comprises an internal thread, optionally defining a nut screw adapted to engage the screw defined by the engagement portion 25: the engagement portion 47 of the auxiliary closure element 46 and the engagement portion 25 of the containment body 2 are configured to then define a threaded coupling, optionally a type of screw-nut screw coupling.

The auxiliary closure element 46 is configured to essentially define a safety plug adapted to hermetically close the discharge opening 34 from the outside and prevent any fluid leakage from the containment body 2.

The auxiliary closure element 46 may comprise a handling portion 48 configured to engage, following the removal of the auxiliary closure element 46 from the containment body 2, the guide portion 50 of the housing 15: the auxiliary closure element 46, in the condition of engagement with the casing 15, is configured to allow the relative movement of the casing 15 with respect to the containment body and consequently of the shutter 26 between the first and the second operating position, and vice versa.

As can be seen in the accompanying figures, the operating portion 48 comprises a projection at least partly counter-shaped to the seat of the guide portion 50 of the casing: the projection of the handling portion 48 may be inserted in the seat of the guide portion 50 to allow relative rotation between the casing and the containment body and consequently the relative translation between the latter.

In fact, in addition to defining a safety plug for the discharge opening 34, the auxiliary closure element 46 represents the tool usable to move the casing 15 along a direction parallel to the longitudinal axis X of the containment body 2 and therefore usable to move the shutter between the first and second operating positions, and vice versa.

### Process of making the separator 1

The following section describes a process of making a separator 1 of solid particles; in particular, the separator 1 of the type according to the above description and/or to one or more of the appended claims and/or to one of the preceding aspects. In a preliminary step, the process provides for the provision of the containment body 2, of the magnetic device 14 and of the shutter 26 carried by the casing 15 of the magnetic device 14.

The process involves a step of inserting the magnetic device 14 into the containment body 2, so that the magnetic device 14 is at least partly facing the access 29 of the containment body 2: the insertion of the magnetic device 14 is carried out through the through opening 17.

Subsequently, the magnetic device 14 is removably engaged with the containment body 2. In particular, the magnetic device 14 is engaged to the containment body 2 by means of the constraint of the engagement portion 42 of the casing 15 to the engagement portion 18 of the containment body 2. Furthermore, the closure element 45 carrying the magnet 16 integrally is engaged to the containment body by coupling the respective engagement portions (41 and 44).

Subsequently, the shutter 26 carried by the casing is moved in the first operating position in which it inhibits the passage of fluid through the discharge opening 34. This movement is performed by moving the casing 15 with respect to the containment body 2 along a direction parallel to the longitudinal axis X of the containment body 2. The relative movement can be carried out by means of a relative rotation of the casing 15 with respect to the containment body 2: thanks to the screw-nut screw coupling, following a relative rotation between the containment body and the casing 15, the latter can move to the inside the compartment 3 thus allowing the shutter 26 to move.

The process may also optionally provide the provision of the diverter 6 and the insertion of the latter in the containment body 2. In particular, the process may provide for the insertion and removable engagement of the diverter 6 inside the housing compartment 3 of the containment body 2 interposed between the inlet 4 and the outlet 5 so as to form the first and the second chamber 7, 11. The diverter 6 is then positioned at the top portion 2a of the containment body 2. The stable and reversible engagement of the diverter 6 inside the housing compartment 3 of the containment body 2 is allowed by the elastic return of the diverter 6.

The diverter 6 may be made according to the process described in paragraphs [0161] to [0163] of the European patent application no. EP 3 150 266 A1.

### Method of separating solid particles from a fluid

The present invention also relates to a method of separating solid particles from a fluid by means of a separator 1 according to one or more of the appended claims.

The method involves introducing a fluid, for example water, into the separator 1 through the inlet 4. If the diverter 6 is present (optional element), the fluid is introduced into the first chamber 7 in a direction substantially intersecting a longitudinal development axis of the diverter 6 and is intended to cross consecutively the first chamber 7, the second chamber 11 and the outlet 5. The fluid flow introduced defines, in contact with the main elements 22 of the diverter 6, a cyclonic pattern adapted to allow the deposit of solid particles on the bottom portion 2b of the containment body 2. The cyclonic pattern of the fluid is defined at least inside the first chamber 7 and can also take place inside the first compartment 11a of the second chamber 11.

The method further provides for a step of retaining the suspended ferrous particles in the fluid on the outer surface of the casing 15 of the magnetic device 14. The fluid is then made to flow through the outlet 5, optionally through the second chamber 11, and subsequently expelled from the separator 1.

### Method of discharging solid particles

The present invention also relates to a method of discharging solid particles, optionally ferrous/ferromagnetic, from a separator 1 according to one or more of the appended claims.

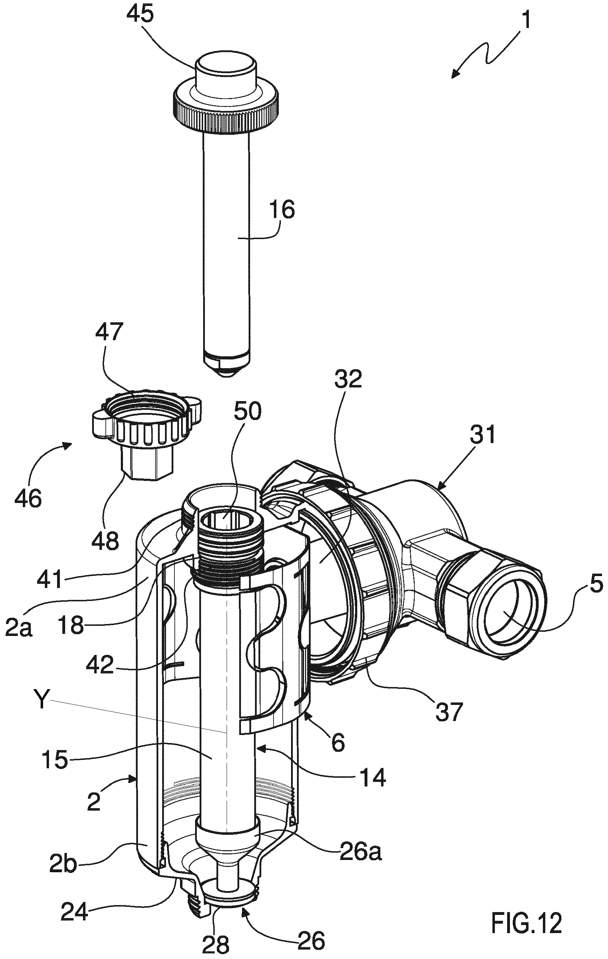

The method comprises a step of extracting the magnet 16 from the casing 15 to allow the particles held by the fluid to fall on the bottom portion 2b, optionally on the bottom wall 24, of the containment body 2. This step of removing the magnet 16 comprises a preliminary step of release, optionally by unscrewing, of the closure element 45 from the containment body 2; following the uncoupling of the closure element 45, this can be moved away from the containment body 2 together with the magnet 16 - integral with the closure element 45 - to allow the complete extraction of the magnet 16 from the casing 15 (step schematized in figure 12).

Following the removal of the magnet 16, any ferrous particles retained by the magnetic device 14 precipitate by gravity on the bottom wall 24 of the containment body 2.

Subsequently, the method provides for moving the shutter 26 from the first to the second operating position in order to allow the exit of the solid particles from the separator 1 through the discharge opening 34. The step of moving the shutter 26 from the first to the second operating position comprises at least a sub-step of translating the casing 15 relative to the containment body 2 along a direction parallel to the axis X; this movement can be obtained, for example, by means of the relative rotation of the casing 15 with respect to the body 2 about its own axis Y: thanks to the screw-nut screw coupling between the casing and the containment body, the rotation of the casing 15 allows generating a corresponding movement thereof in a direction parallel to the axis X. In greater detail again, by unscrewing the casing with respect to the containment body, it is possible to obtain a separation of the latter from the bottom portion with consequent movement of the shutter 26 in the second operating position.

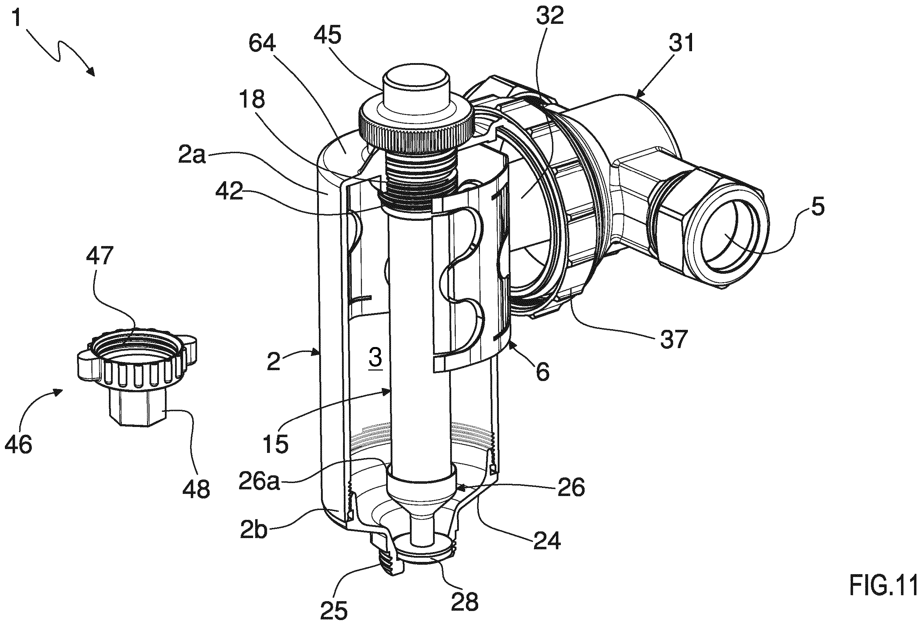

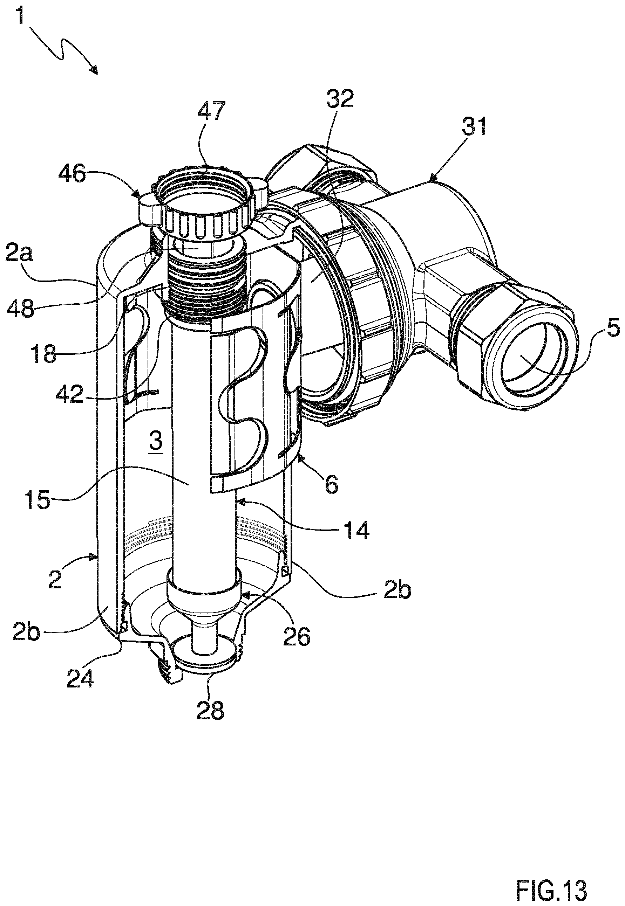

The movement of the casing 15 can be performed using the further closure element 46. In particular, the method can provide for the removal of the auxiliary closure element 46 from the containment body 2 (figure 11) and the subsequent engagement of the latter to the casing 15 (figure 13); in detail, this engagement step may include the engagement of the operating portion 48 of the auxiliary closure element 46 in the guide portion 50 of the casing 15.

Subsequently, it is possible to move the casing 15 by moving (for example rotating) the auxiliary closure element 46 to consequently move the shutter 26 from the first to the second operating position.

Once the shutter 26 has been moved to the second operating position, the method can provide for the introduction of a fluid inside the containment body 2 so that any solid particles, optionally ferrous, accumulated on the bottom portion 2b can be collected from the fluid and guided outside the separator 1 through the discharge opening 34.

## Claims

1. Solid particles-fluid separator (1), optionally for liquid, comprising:
- a containment body (2) extending along a longitudinal axis (X) between a top portion and a bottom portion (2a, 2b) and defining a housing compartment (3), said containment body (2) comprising at least one through access (29) configured for allowing the in and/or out passage of fluid from the containment body (2),
- a magnetic device (14) at least partly arranged in the housing compartment (3) and at least partially facing the access (29), wherein the magnetic device (14) extends for a preponderant part of the containment body (2) along the longitudinal axis (X), said magnetic device (14) being configured for attracting ferrous or ferromagnetic particles present in the fluid, wherein the magnetic device (14) comprises:
∘ a casing (15) having elongated shape and extending between a first end portion (15a), at which the casing (15) is engaged to the containment body (2), and a second end portion (15b),
∘ at least one magnet (16) housed in the casing (15),
wherein the containment body (2) also comprises a discharge opening (34) configured for allowing the discharge of solid particles from the separator (1),
wherein the separator (1) also comprises a shutter (26) carried by the casing (15) and movable relative to the containment body (2), at least between:
- a first operating position in which the shutter (26) prevents the passage of fluid through the discharge opening (34), and
- a second operating position in which the shutter (26) allows the passage of fluid through the discharge opening (34),
wherein the casing (15) comprises a hollow body defining a compartment within which the magnet (16) is housed, the hollow body of the casing (15) having:
- a first passage opening placed at the first end portion of the casing (15) and through which the magnet (16) can be removed from or inserted into the casing (15), wherein the magnetic device (14) comprises a closure element (45) engageable with the containment body (2) and placed to close the first passage opening of the casing (15) ,
**characterized by the fact that**
the hollow body of the casing (15) has a second passage opening placed at the second end portion of the casing (15) in communication with the first passage opening,
the shutter (26) is engaged at the second end portion of the casing (15) and placed to close the second passage opening,
the casing (15), the closure element (45) and the shutter (26) delimit a closed volume compartment for the magnet (16).

2. Separator according to the preceding claim, wherein the containment body (2) comprises, at the top portion (2a), an engagement portion (18),
wherein the casing (15) comprises, at the first end portion (15a), a respective engagement portion (42) constrainable to the engagement portion (18) of the containment body (2),
said engagement portions (18, 42) of the containment body (2) and of the casing (15) defining a threaded coupling configured for allowing at least one relative movement between said containment body (2) and casing (15) along the longitudinal axis (X) of the containment body (2),
optionally the engagement portion of the casing (15) comprises a body having an external thread defining a screw while the engagement portion of the containment body (2) comprises a hollow body having an internal thread defining a nut screw.

3. Separator according to any one of the preceding claims, wherein the containment body (2) comprises a through opening (17), distinct and separate from the access (29), configured for allowing the access to the housing compartment (3) from the outside,
and wherein the magnetic device (14) is at least partly inserted in the housing compartment (3) through the through opening (17) of the containment body (2).

4. Separator according to the claim 1, wherein the containment body (2) comprises, at the top portion (2a), an auxiliary engagement portion (41),
wherein the closure element (45) comprises a respective engagement portion (44) constrainable to the auxiliary engagement portion (41) of the containment body (2).

5. Separator according to the preceding claim, wherein the containment body (2) comprises, at the top wall (2a), a hollow collar internally delimiting the through opening (17),
optionally wherein the engagement portion (18) of the containment body (2) comprises an internal thread inside the hollow collar defining a nut screw,
even more optionally the auxiliary engagement portion (41) of the containment body (2) comprises an external thread outside the collar defining a screw.

6. Separator according to any one of the preceding claims, wherein the access (29) is defined at the top portion (2a) of the containment body (2), optionally the access (29) is defined on a lateral wall of the containment body (2),
wherein the discharge opening (34) is arranged at the bottom portion (2b).

7. Separator according to any one of the preceding claims comprising at least one inlet (4) and at least one outlet (5) for fluid, both being in fluid communication with the through access (29),
wherein the inlet (4) and the outlet (5) comprise respective distinct ducts (32, 33) in communication with the housing compartment (3) of the containment body (2),
wherein said ducts (32, 33) of the inlet and of the outlet (5) are at least for a section coaxial with each other, optionally at least part of the duct (33) of the outlet (5) is extended in an annular manner around the duct (32) of the inlet (4).

8. Separator according to any one of the preceding claims, wherein the shutter (26) emerges from the magnetic device (14) starting from the second end portion (15b) of the casing (15), moving away from the first end portion (15a) of the same casing (15),
and wherein the shutter (26) is movable between the first and the second operating position, and vice versa, along a direction substantially parallel to the longitudinal axis (X) of the containment body (2).

9. Separator according to any one of the preceding claims, wherein the shutter (26) comprises:
- an attachment portion (26a) fixed to the casing (15) at the second end portion (15b),
- a closure body (28) constrained to the attachment portion (26a) and configured for fluid-tightly closing the discharge opening (34) in the second operating position of the shutter (26).

10. Separator according to the preceding claim, wherein the closure body (28) is hinged to the attachment portion (26a) such as to be able to rotate with respect to the latter at least around an axis.

11. Separator according to any one of the preceding claims, wherein the magnet (16) extends within the casing for a preponderant part of the extension of the latter, starting from the first end portion (15a) of the casing (15) in the direction of the second end portion (15b),
wherein the magnet (16) is arranged in the casing facing the access (29).

12. Separator according to any one of the preceding claims comprising at least one auxiliary closure element (46) engageable with the containment body (2) for closing the discharge opening (34),
wherein the containment body (2) comprises a further hollow collar emerging from the bottom wall (24) and internally delimiting the discharge opening (34),
wherein said hollow collar placed on the bottom wall (24) of the containment body (2) comprises an engagement portion (25) configured for being removably constrained to a respective engagement portion (47) of the auxiliary closure element (46),
wherein the auxiliary closure element (46) comprises a handling portion (48), wherein the casing (15) comprises a guide portion (50) placed at the first end portion (15a) and configured for engagingly receiving the handling portion (48) of the auxiliary closure element (46),
wherein the auxiliary closure element (46), in the condition of engagement with the casing (15), is configured for allowing the relative movement of the casing relative to the containment body and consequently of the shutter between the first and the second operating position, and vice versa,
wherein the handling portion (48), when engaged with the guide portion of the casing (15), is configured for allowing the movement of the casing (15) along a direction parallel to the longitudinal axis (X) of the containment body (2).

13. Method of separating solid particles from a fluid by means of a separator (1) in accordance with any one of the preceding claims,
wherein the method comprises at least the following steps:
- introducing a fluid in the housing compartment (3) of the containment body (2) through the access (29),
- retaining, by means of the magnetic device (14), solid particles, optionally ferrous or ferromagnetic, present in the fluid,
- discharging the fluid previously introduced into the housing compartment (3) from the containment body (2) through the access (29).

14. Method of discharging solid particles from a separator (1) in accordance with any one of the claims 1 to 12, said method comprising at least the following steps:
- extracting the magnet (16) from the casing (15) in order to allow the fall of the ferrous or ferromagnetic particles retained by the fluid on the bottom portion (2b) of the containment body (2),
- moving the shutter (26) from the first to the second operating position in order to allow the exit of the solid particles from the separator through the discharge opening.

15. Method according to the preceding claim, using the separator of claim 12, wherein the step of extracting the magnet (16) comprises the following sub-steps:
- releasing, optionally unscrewing, the closure element (45) from the containment body (2),
- moving the closure element (45) together with the magnet (16) away from the containment body (2) in order to allow the extraction of the magnet (16) from the casing (15),
wherein the step of moving the shutter (26) from the first to the second operating position comprises at least one sub-step of rotating the casing (15) relative to the containment body to define a movement of the same casing and hence of the shutter (26) carried by the casing (15) along a direction parallel to the longitudinal axis (X) of the containment body (2);
wherein the step of moving the shutter (26) from the first to the second operating position also comprises at least the following sub-steps:
- removing the auxiliary closure element (46) from the containment body (2),
- engaging the handling portion (48) with the guide portion (50) of the casing (15),
- moving the casing (15) by means of the auxiliary closure element (46) in order to move the shutter (26) from the first to the second operating position.

## Patentansprüche

1. Feststoffteilchen-Fluid-Separator (1), optional für Flüssigkeit, welcher aufweist:
- einen Behälterkörper (2), der sich entlang einer Längsachse (X) zwischen einem oberen Abschnitt und einem Bodenabschnitt (2a, 2b) erstreckt und ein Aufnahmeabteil (3) definiert, wobei der Behälterkörper (2) zumindest einen Durchgangszugang (29) aufweist, der konfiguriert ist, um den Ein- und/oder Austritt von Fluid in/aus dem Behälterkörper (2) zu erlauben,
- eine magnetische Vorrichtung (14), die zumindest teilweise in dem Aufnahmeabteil (3) angeordnet ist und zumindest teilweise zu dem Zugang (29) weist, wobei sich die magnetische Vorrichtung (14) für einen überwiegenden Teil des Behälterkörpers (2) entlang der Längsachse (X) erstreckt, wobei die magnetische Vorrichtung (14) konfiguriert ist, um eiserne oder ferromagnetische Partikel anzuziehen, die sich in dem Fluid befinden, wobei die magnetische Vorrichtung (14) aufweist:
∘ ein Gehäuse (12), das eine längliche Form hat und sich zwischen einem ersten Endabschnitt (15a), an dem das Gehäuse (15) mit dem Behälterkörper (2) in Eingriff steht, und einem zweiten Endabschnitt (15b) erstreckt,
o zumindest einen Magneten (16), der in dem Gehäuse (15) aufgenommen ist,
wobei der Behälterkörper (2) auch eine Ausgabeöffnung (34) aufweist, die konfiguriert ist, um die Ausgabe von Feststoffteilchen aus dem Separator (1) zu erlauben, wobei der Separator (1) auch einen Verschluss (26) aufweist, der an dem Gehäuse (15) gelagert ist und relativ zu dem Behälterkörper (2) beweglich ist, zumindest zwischen:
- einer ersten Betriebsposition, in der der Verschluss (26) den Durchtritt von Fluid durch die Ausgabeöffnung (34) verhindert, und
- einer zweiten Betriebsposition, in der der Verschluss (26) den Durchtritt von Fluid durch die Ausgabeöffnung (34) erlaubt,
wobei das Gehäuse (15) einen Hohlkörper aufweist, der ein Abteil definiert, in dem der Magnet (16) aufgenommen ist, wobei der Hohlkörper des Gehäuses (15) aufweist:
- eine erste Durchgangsöffnung, die an dem ersten Endabschnitt des Gehäuses (15) platziert ist und durch die der Magnet (16) aus dem Gehäuse (15) entfernt oder in dieses eingesetzt werden kann, wobei die magnetische Vorrichtung (14) ein Schließelement (45) aufweist, das mit dem Behälterkörper (2) in Eingriff bringbar ist und platziert ist, um die ersten Durchgangsöffnung (15) zu verschließen,
**dadurch gekennzeichnet, dass**
der Hohlkörper des Gehäuses (15) eine zweite Durchgangsöffnung hat, die an dem zweiten Endabschnitt des Gehäuses (15) in Verbindung mit der ersten Durchgangsöffnung platziert ist,
der Verschluss (26) an dem zweiten Endabschnitt des Gehäuses (15) in Eingriff steht und zum Verschließen der zweiten Durchgangsöffnung platziert ist,
das Gehäuse (15), das Schließelement (45) und der Verschluss (26) ein Abteil mit geschlossenem Volumen für den Magneten (16) begrenzen.

2. Separator nach dem vorhergehenden Anspruch, wobei der Behälterkörper (2) an dem oberen Abschnitt (2a) einen Eingriffsabschnitt (18) aufweist, wobei das Gehäuse (15) an dem ersten Endabschnitt (15a) einen jeweiligen Eingriffsabschnitt (42) aufweist, der zu dem Eingriffsabschnitt (18) des Behälterkörpers (2) spannbar ist,
wobei die Eingriffsabschnitte (18, 42) des Behälterkörpers (2) und des Gehäuses (15) eine Gewindekupplung definieren, die konfiguriert ist, um zumindest eine Relativbewegung zwischen dem Behälterkörper (2) und dem Gehäuse (15) entlang der Längsachse (X) des Behälterkörpers (2) zu erlauben, wobei optional der Eingriffsabschnitt des Gehäuses (15) einen Körper mit einem Außengewinde aufweist, das eine Schraube definiert, während der Eingriffsabschnitt des Behälterkörpers (2) einen Hohlkörper aufweist, der ein Innengewinde hat, das eine Schraubmutter definiert.

3. Separator nach einem der vorhergehenden Ansprüche, wobei der Behälterkörper (2) eine von dem Zugang (29) getrennte und separate Durchgangsöffnung (17) aufweist, die konfiguriert ist, um den Zugang zu dem Aufnahmeabteil (3) von der Außenseite her zu erlauben,
und wobei die magnetische (14) durch die Durchgangsöffnung (17) des Behälterkörpers (2) zumindest teilweise in das Aufnahmeabteil (3) eingesetzt ist.

4. Separator nach Anspruch 1, wobei der Behälterkörper (2) an dem oberen Abschnitt (2a) einen Hilfseingriffsabschnitt (41) aufweist,
wobei das Schließelement (45) einen jeweiligen Eingriffsabschnitt (44) aufweist, der zu dem Hilfseingriffsabschnitt (41) des Behälterkörpers (2) spannbar ist.

5. Separator nach dem vorhergehenden Anspruch, wobei der Behälterkörper (2) an der oberen Wand (2a) einen hohlen Kragen aufweist, der im Inneren die Durchgangsöffnung (17) begrenzt,
wobei optional der Eingriffsabschnitt (18) des Behälterkörpers (2) ein Innengewinde innerhalb des hohlen Kragens aufweist, das eine Schraubmutter definiert,
wobei noch weiter optional der Hilfseingriffsabschnitt (41) des Behälterkörpers (2) ein Außengewinde außerhalb des Kragens aufweist, das eine Schraube definiert.

6. Separator nach einem der vorhergehenden Ansprüche, wobei der Zugang (29) an dem oberen Abschnitt (2a) des Behälterkörpers (2) definiert ist, optional der Zugang (29) an einer Seitenwand des Behälterkörpers (2) definiert ist,
wobei die Ausgabeöffnung (34) an dem Bodenabschnitt (2b) angeordnet ist.

7. Separator nach einem der vorhergehenden Ansprüche, der zumindest einen Einlass (4) und zumindest einen Auslass (5) für Fluid aufweist, die beide mit dem Durchgangszugang (29) in Fluidverbindung stehen,
wobei der Einlass (4) und der Auslass (5) jeweilige gesonderte Leitungen (32, 33) in Verbindung mit dem Aufnahmeabteil (3) des Behälterkörpers (2) aufweisen,
wobei die Leitungen (32, 33) vom Einlass und vom Auslass (5) zumindest für einen Abschnitt koaxial zueinander sind, wobei sich optional zumindest ein Teil der Leitung (33) des Auslasses (5) ringförmig um die Leitung (32) des Einlasses (4) erstreckt.

8. Separator nach einem der vorhergehenden Ansprüche, wobei der Verschluss (26), ausgehend von dem zweiten Endabschnitt (15b) des Gehäuses (15), aus der magnetischen Vorrichtung (14) austritt, wobei er sich von dem ersten Endabschnitt (15a) dieses Gehäuses (15) wegbewegt,
und wobei der Verschluss (26) zwischen der ersten und der zweiten Betriebsposition und umgekehrt entlang einer Richtung bewegbar ist, die im Wesentlichen parallel zur Längsachse (X) des Behälterkörpers (2) ist.

9. Separator nach einem der vorhergehenden Ansprüche, wobei der Verschluss (26) aufweist:
- einen Halterungsabschnitt (26a), der an dem Gehäuse (15) an dem zweiten Endabschnitt (15b) befestigt ist,
- einen Schließkörper (28), der zu dem Halterungsabschnitt (26a) hin gespannt und konfiguriert ist, um in der zweiten Betriebsposition des Verschlusses (26) die Ausgabeöffnung (34) fluiddicht zu verschließen.

10. Separator nach dem vorhergehenden Anspruch, wobei der Verschlusskörper (28) an dem Halterungsabschnitt (26) angelenkt ist, sodass er in Bezug auf den Letzteren zumindest um eine Achse herum drehbar ist.

11. Separator nach einem der vorhergehenden Ansprüche, wobei, ausgehend von dem ersten Endabschnitt (15a) des Gehäuses (15) in der Richtung des zweiten Endabschnitts (15b), sich der Magnet (16) innerhalb des Gehäuses für ein überwiegendes Teil der Erstreckung des Letzteren erstreckt, wobei der Magnet (16) gegenüber dem Zugang (29) in dem Gehäuse angeordnet ist.

12. Separator nach einem der vorhergehenden Ansprüche, der zumindest ein Hilfsschließelement (46) aufweist, das mit dem Behälterkörper (2) in Eingriff bringbar ist, um die Ausgabeöffnung (34) zu verschließen,
wobei der Behälterkörper (2) einen weiteren hohlen Kragen aufweist, der von der Bodenwand (24) vorsteht und im Inneren die Ausgabeöffnung (34) begrenzt,
wobei der auf der Bodenwand (24) des Behälterkörpers (2) platzierte hohle Kragen einen Eingriffsabschnitt (25) aufweist, der so konfiguriert ist, dass er zu einem jeweiligen Eingriffsabschnitt (47) des Hilfsschließelements (27) lösbar spannbar ist,
wobei das Hilfsschließelement (46) einen Handhabungsabschnitt (48) aufweist, wobei das Gehäuse (15) einen Führungsabschnitt (50) aufweist, der an dem ersten Endabschnitt (15a) platziert und konfiguriert ist, um den Handhabungsabschnitt (48) des Hilfsschließelements (46) eingreifend aufzunehmen,
wobei das Hilfsschließelement (46) konfiguriert ist, um in dem Eingriffszustand mit dem Gehäuse (15) die relative Bewegung des Gehäuses relativ zu dem Behälterkörper und demzufolge des Verschlusses zwischen der ersten und der zweiten Betriebsposition und umgekehrt zu erlauben,
wobei der Handhabungsabschnitt (48), konfiguriert ist, um, wenn er mit dem Führungsabschnitt des Gehäuses (15) in Eingriff steht, die Bewegung des Gehäuses (15) entlang einer Richtung parallel zur Längsachse (X) des Behälterkörpers (2) zu erlauben.

13. Verfahren zum Trennen von Feststoffteilchen von einem Fluid mittels eines Separators (1) nach einem der vorhergehenden Ansprüche,
wobei das Verfahren zumindest die folgenden Schritte aufweist:
- Einleiten eines Fluids in das Aufnahmeabteil (3) des Behälterkörpers (2) durch den Zugang (29),
- Zurückhalten, mittels der magnetischen Vorrichtung (14), von optional eisernen oder ferromagnetischen Feststoffteilchen, die sich in dem Fluid befinden,
- Ausgeben des Fluids, das zuvor in das Aufnahmeabteil (3) eingeleitet worden ist, aus dem Behälterkörper (2) durch den Zugang (29).

14. Verfahren zum Ausgeben von Feststoffteilchen aus einem Separator (1) nach einem der Ansprüche 1 bis 12, wobei das Verfahren zumindest die folgenden Schritte aufweist:
- Herausziehen des Magneten (16) aus dem Gehäuse (15), um zu erlauben, dass die eisernen oder ferromagnetischen Partikel, die vom Fluid am Bodenabschnitt (2b) des Behälterkörpers (2) zurückgehalten wurden, herausfallen,
- Bewegen des Verschlusses (26) von der ersten zur zweiten Betriebsposition, um zu erlauben, dass die Feststoffteilchen aus dem Separator durch die Ausgabeöffnung austreten.

15. Verfahren nach dem vorhergehenden Anspruch, mittels des Separators von Anspruch 12, wobei der Schritt des Herausziehens des Magneten (16) die folgenden Teilschritte aufweist:
- Lösen, optional Abschrauben, des Schließelements (45) von dem Behälterkörper (2),
- Bewegen des Schließelements (45) zusammen mit dem Magneten (16) von dem Behälterkörper (2) weg, um das Herausziehen des Magneten (16) aus dem Gehäuse (15) zu erlauben,
wobei der Schritt des Bewegens des Verschlusses (26) von der ersten zur zweiten Betriebsposition zumindest einen Teilschritt aufweist, das Gehäuse (15) relativ zu dem Behälterkörper zu drehen, um eine Bewegung dieses Gehäuses und daher des am Gehäuse (15) getragenen Verschlusses (26) entlang einer Richtung parallel zur Längsachse (X) des Behälterkörpers (2) zu definieren;
wobei der Schritt des Bewegens des Verschlusses (26) von der ersten zur zweiten Betriebsposition auch zumindest die folgenden Teilschritte aufweist:
- Entfernen des Hilfsschließelements (46) von dem Behälterkörper (2),
- In Eingriff Bringen des Handhabungsabschnitts (48) mit dem Führungsabschnitt (50) des Gehäuses (15),
- Bewegen des Gehäuses (15) mittels des Hilfsschließelements (46), um den Verschluss (26) von der ersten zu der zweiten Betriebsposition zu bewegen.

## Revendications

1. Séparateur (1) de particules solides-fluide, éventuellement pour un liquide, comprenant :
- un corps de confinement (2) s'étendant le long d'un axe longitudinal (X) entre une portion supérieure et une portion inférieure (2a, 2b) et définissant un compartiment de logement (3), ledit corps de confinement (2) comprenant au moins un accès (29) traversant conçu pour permettre le passage vers l'intérieur et/ou vers l'extérieur du fluide depuis le corps de confinement (2),
- un dispositif magnétique (14) disposé au moins partiellement dans le compartiment de logement (3) et faisant face au moins partiellement à l'accès (29), le dispositif magnétique (14) s'étendant pour une partie prépondérante du corps de confinement (2) le long de l'axe longitudinal (X), ledit dispositif magnétique (14) étant conçu pour attirer des particules ferreuses ou ferromagnétiques présentes dans le fluide, le dispositif magnétique (14) comprenant :
∘ un boîtier (15) ayant une forme allongée et s'étendant entre une première portion d'extrémité (15a), au niveau de laquelle le boîtier (15) est engagé au corps de confinement (2), et une seconde portion d'extrémité (15b),
∘ au moins un aimant (16) logé dans le boîtier (15),
le corps de confinement (2) comprenant également une ouverture d'évacuation (34) conçue pour permettre l'évacuation des particules solides depuis le séparateur (1),
le séparateur (1) comprenant également un obturateur (26) porté par le boîtier (15) et mobile par rapport au corps de confinement (2), au moins entre :
- une première position fonctionnelle dans laquelle l'obturateur (26) empêche le passage du fluide à travers l'ouverture d'évacuation (34), et
- une seconde position fonctionnelle dans laquelle l'obturateur (26) permet le passage du fluide à travers l'ouverture d'évacuation (34),
le boîtier (15) comprenant un corps creux définissant un compartiment à l'intérieur duquel l'aimant (16) est logé, le corps creux du boîtier (15) ayant :
- une première ouverture de passage placée au niveau de la première portion d'extrémité du boîtier (15) et à travers laquelle l'aimant (16) peut être retiré du, ou inséré dans le, boîtier (15), le dispositif magnétique (14) comprenant un élément de fermeture (45) pouvant être engagé avec le corps de confinement (2) et placé pour fermer la première ouverture de passage du boîtier (15),
**caractérisé par le fait que**
le corps creux du boîtier (15) présente une seconde ouverture de passage placée au niveau de la seconde portion d'extrémité du boîtier (15) en communication avec la première ouverture de passage,
l'obturateur (26) étant engagé au niveau de la seconde portion d'extrémité du boîtier (15) et placé pour fermer la seconde ouverture de passage,
le boîtier (15), l'élément de fermeture (45) et l'obturateur (26) délimitant un compartiment à volume fermé pour l'aimant (16).

2. Séparateur selon la revendication précédente, le corps de confinement (2) comprenant, au niveau de la portion supérieure (2a), une portion d'engagement (18),
le boîtier (15) comprenant, au niveau de la première portion d'extrémité (15a), une portion d'engagement respective (42) pouvant être contrainte à la portion d'engagement (18) du corps de confinement (2),
lesdites portions d'engagement (18, 42) du corps de confinement (2) et du boîtier (15) définissant un accouplement fileté conçu pour permettre au moins un mouvement relatif entre lesdits corps de confinement (2) et boîtier (15) le long de l'axe longitudinal (X) du corps de confinement (2),
éventuellement la portion d'engagement du boîtier (15) comprenant un corps ayant un filetage externe fixant une vis tandis que la portion d'engagement du corps de confinement (2) comprend un corps creux ayant un filetage interne fixant une vis femelle.

3. Séparateur selon l'une quelconque des revendications précédentes, le corps de confinement (2) comprenant une ouverture traversante (17), distincte et séparée de l'accès (29), conçue pour permettre l'accès au compartiment de logement (3) depuis l'extérieur,
et le dispositif magnétique (14) étant au moins partiellement inséré dans le compartiment de logement (3) à travers l'ouverture traversante (17) du corps de confinement (2).

4. Séparateur selon la revendication 1, le corps de confinement (2) comprenant, au niveau de la portion supérieure (2a), une portion d'engagement auxiliaire (41),
l'élément de fermeture (45) comprenant une portion d'engagement respective (44) pouvant être contrainte à la portion d'engagement auxiliaire (41) du corps de confinement (2).

5. Séparateur selon la revendication précédente, le corps de confinement (2) comprenant, au niveau de la paroi supérieure (2a), un collier creux délimitant au plan interne l'ouverture traversante (17),
éventuellement la portion d'engagement (18) du corps de confinement (2) comprenant un filetage interne à l'intérieur du collier creux fixant une vis femelle,
même plus éventuellement la portion d'engagement auxiliaire (41) du corps de confinement (2) comprenant un filetage externe extérieur au collier fixant une vis.

6. Séparateur selon l'une quelconque des revendications précédentes, l'accès (29) étant défini au niveau de la portion supérieure (2a) du corps de confinement (2), éventuellement l'accès (29) étant défini sur une paroi latérale du corps de confinement (2),
l'ouverture d'évacuation (34) étant disposée au niveau de la portion inférieure (2b).

7. Séparateur selon l'une quelconque des revendications précédentes, comprenant au moins un orifice d'entrée (4) et au moins un orifice de sortie (5) pour le fluide, étant à la fois en communication fluidique avec l'accès (29) traversant,
l'orifice d'entrée (4) et l'orifice de sortie (5) comprenant des conduits (32, 33) distincts respectifs en communication avec le compartiment de logement (3) du corps de confinement (2),
lesdits conduits (32, 33) de l'orifice d'entrée et de l'orifice de sortie (5) étant au moins pour une section coaxiaux l'un par rapport à l'autre, éventuellement au moins une partie du conduit (33) de l'orifice de sortie (5) étant étendue d'une manière annulaire autour du conduit (32) de l'orifice d'entrée (4).

8. Séparateur selon l'une quelconque des revendications précédentes, l'obturateur (26) émergeant du dispositif magnétique (14) en commençant depuis la seconde portion d'extrémité (15b) du boîtier (15), à l'opposé de la première portion d'extrémité (15a) du même boîtier (15),
et l'obturateur (26) étant mobile entre la première et la seconde position fonctionnelle, et *vice versa,* le long d'un sens sensiblement parallèle à l'axe longitudinal (X) du corps de confinement (2).

9. Séparateur selon l'une quelconque des revendications précédentes, l'obturateur (26) comprenant :
- une portion de fixation (26a) fixée au boîtier (15) au niveau de la seconde portion d'extrémité (15b),
- un corps de fermeture (28) contraint à la portion de fixation (26a) et conçu pour la fermeture étanche au fluide de l'ouverture d'évacuation (34) dans la seconde position fonctionnelle de l'obturateur (26).

10. Séparateur selon la revendication précédente, le corps de fermeture (28) étant articulé à la portion de fixation (26a) afin de pouvoir tourner par rapport à cette dernière au moins autour d'un axe.

11. Séparateur selon l'une quelconque des revendications précédentes, l'aimant (16) s'étendant à l'intérieur du boîtier pour une partie prépondérante de l'extension de ce dernier, en commençant depuis la première portion d'extrémité (15a) du boîtier (15) dans le sens de la seconde portion d'extrémité (15b),
l'aimant (16) étant disposé dans le boîtier faisant face à l'accès (29).

12. Séparateur selon l'une quelconque des revendications précédentes, comprenant au moins un élément de fermeture auxiliaire (46) pouvant être engagé avec le corps de confinement (2) pour fermer l'ouverture d'évacuation (34),
le corps de confinement (2) comprenant un collier creux supplémentaire émergeant de la paroi inférieure (24) et délimitant au plan interne l'ouverture d'évacuation (34),
ledit collier creux placé sur la paroi inférieure (24) du corps de confinement (2) comprenant une portion d'engagement (25) conçue pour être contrainte de manière amovible à une portion d'engagement respective (47) de l'élément de fermeture auxiliaire (46),
l'élément de fermeture auxiliaire (46) comprenant une portion de manipulation (48),
le boîtier (15) comprenant une portion de guidage (50) placée au niveau de la première portion d'extrémité (15a) et conçue pour recevoir de manière à s'engager la portion de manipulation (48) de l'élément de fermeture auxiliaire (46),
l'élément de fermeture auxiliaire (46), dans l'état d'engagement avec le boîtier (15), étant conçu pour permettre le mouvement relatif du boîtier par rapport au corps de confinement et par la suite de l'obturateur entre la première et la seconde position fonctionnelle, et *vice versa,*
la portion de manipulation (48), lorsqu'engagée avec la portion de guidage du boîtier (15), étant conçue pour permettre le mouvement du boîtier (15) le long d'un sens parallèle à l'axe longitudinal (X) du corps de confinement (2).

13. Procédé de séparation de particules solides d'un fluide à l'aide d'un séparateur (1) selon l'une quelconque des revendications précédentes,
le procédé comprenant au moins les étapes suivantes :
- introduction d'un fluide dans le compartiment de logement (3) du corps de confinement (2) à travers l'accès (29),
- retenue, à l'aide du dispositif magnétique (14), de particules solides, éventuellement ferreuses ou ferromagnétiques, présentes dans le fluide,
- évacuation du fluide précédemment introduit dans le compartiment de logement (3) depuis le corps de confinement (2) à travers l'accès (29).

14. Procédé d'évacuation de particules solides d'un séparateur (1) selon l'une quelconque des revendications 1 à 12, ledit procédé comprenant au moins les étapes suivantes :
- extraction de l'aimant (16) du boîtier (15) afin de permettre la chute des particules ferreuses ou ferromagnétiques retenues par le fluide sur la portion inférieure (2b) du corps de confinement (2),
- déplacement de l'obturateur (26) depuis la première vers la seconde position fonctionnelle afin de permettre la sortie des particules solides du séparateur à travers l'ouverture d'évacuation.

15. Procédé selon la revendication précédente, utilisant le séparateur selon la revendication 12,
l'étape d'extraction de l'aimant (16) comprenant les sous-étapes suivantes :
- libération, éventuellement dévissage, de l'élément de fermeture (45) depuis le corps de confinement (2),
- déplacement de l'élément de fermeture (45) conjointement à l'aimant (16) à l'opposé du corps de confinement (2) afin de permettre l'extraction de l'aimant (16) du boîtier (15),
l'étape de déplacement de l'obturateur (26) depuis la première vers la seconde position fonctionnelle comprenant au moins une sous-étape de rotation du boîtier (15) par rapport au corps de confinement pour définir un mouvement du même boîtier et de-là de l'obturateur (26) porté par le boîtier (15) le long d'un sens parallèle à l'axe longitudinal (X) du corps de confinement (2) ;
l'étape de déplacement de l'obturateur (26) depuis la première vers la seconde position fonctionnelle comprenant également au moins les sous-étapes suivantes :
- retrait de l'élément de fermeture auxiliaire (46) du corps de confinement (2),
- engagement de la portion de manipulation (48) avec la portion de guidage (50) du boîtier (15),
- déplacement du boîtier (15) à l'aide de l'élément de fermeture auxiliaire (46) afin de déplacer l'obturateur (26) depuis la première vers la seconde position fonctionnelle.
